(19) **Europäisches Patentamt European Patent Office Office européen des brevets**

(11) **EP 4 745 783 A1**

(12) **EUROPEAN PATENT APPLICATION**

(43) Date of publication:
20.05.2026 Bulletin 2026/21

(21) Application number: 25207481.0

(22) Date of filing: 08.10.2025

(51) International Patent Classification (IPC):
*G06F 11/34* (2006.01)          *G06F 9/50* (2006.01)

(52) Cooperative Patent Classification (CPC):
G06F 9/505; G06F 11/3409; G06F 11/3433

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 15.11.2024 US 202418949716

(71) Applicant: Intel Corporation
Santa Clara, CA 95054 (US)

(72) Inventors:
• DREWEK-OSSOWICKA, Anna
80-257 Gdansk (PL)
• LISOWSKI, Marcin
81-461 Gdynia (PL)
• NAHUM, Yair
Atlit (IL)

(74) Representative: Viering, Jentschura & Partner mbB
Patent- und Rechtsanwälte
Am Brauhaus 8
01099 Dresden (DE)

(54) **METHODS AND APPARATUS TO REDUCE AN ACTION SPACE FOR WORKLOAD EXECUTION**

(57)     An example apparatus includes at least one programmable circuit to analyze workload runs for a plurality of combinations of enabled setting to determine a subset of the plurality of combinations that satisfy a target performance metric; run a workload for a second combination of enabled settings to generate a result, the second combination combining enabled settings from two or more of the subset of the plurality of combinations; analyze the result to determine the second combination satisfies the target performance metric; and deploy the second combination and the subset of the plurality of combinations to a device to process a second workload using at least one of the second combination of the subset of the plurality of combinations.

START → 200

202 CREATE NEW SMALL ACTION SPACE

204 RUN WORKLOAD SWEEPS BASED ON SMALL ACTION SPACE

206 PERFORM DATA ANALYSIS ON WORKLOAD SWEEPS

YES    208 EXPLORE ACTION BIT COMBINATIONS?

NO

210 OUTPUT SELECTED ACTIONS TO AGENT(S)

END

**FIG. 2**

EP 4 745 783 A1

## Description

BACKGROUND

Computing environments (e.g., an edge environment, a cloud environment, a distributed network, a datacenter, an Edge, Fog, multi-access edge computing (MEC), or Internet of Things (IoT) network) enable a first device to access to services (e.g., execution of one or more computing tasks, execution of a machine learning model using input data, access to data, etc.) associated with a difference device within the network. Edge environments may include infrastructure, such as an edge platform, that is connected to cloud infrastructure, endpoint devices, and/or additional edge infrastructure via networks, such as the Internet. Edge platforms may be closer in proximity to endpoint devices than cloud infrastructure, such as centralized servers.

BRIEF DESCRIPTION OF THE DRAWINGS

FIG. 1 is an example environment including action determination circuitry to generate a group of actions that an agent may implement when executing a workload.
FIGS. 2-6 are flowcharts representative of example machine-readable instructions and/or operations that may be executed, instantiated, and/or performed by programmable circuitry to implement the action determination circuitry of FIG. 1.
FIGS. 7A and 7B illustrate an example of input data gathered from the platform of FIG. 1 for a particular workload test run.
FIG. 8A, 8B, and 8C illustrate representations of the weights generated by the sampling circuitry of FIG. 1 based on a single setting workload run.
FIG. 9A, 9B, and 9C illustrate representations of the weights generated by the sampling circuitry of FIG. 1 based on a multiple setting workload run.
FIG. 10 is a block diagram of an example processor platform including programmable circuitry structured to execute, instantiate, and/or perform the computer readable instructions and/or perform the example operations of FIGS. 2-6 to implement the action determination circuitry of FIG. 1.

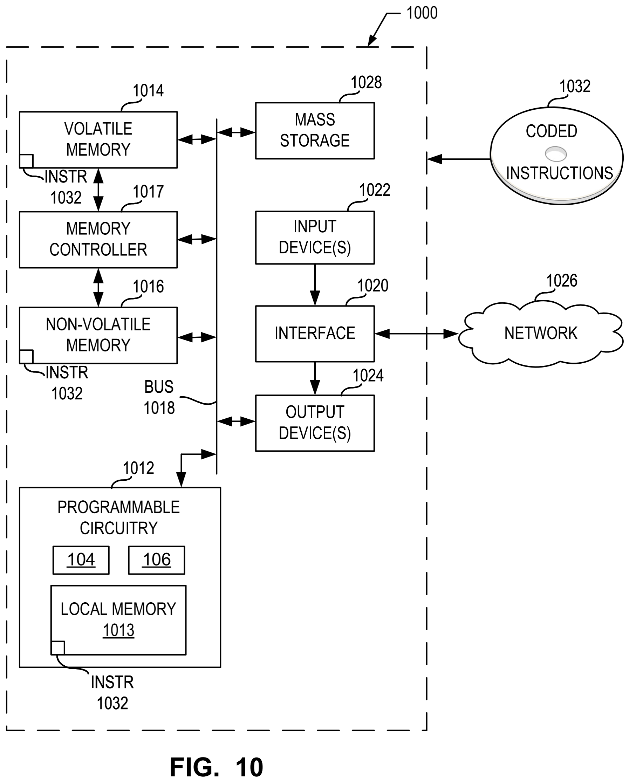

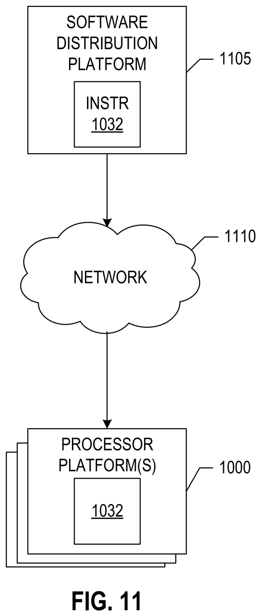

FIG. 11 is a block diagram of an example software/firmware/instructions distribution platform (e.g., one or more servers) to distribute software, instructions, and/or firmware (e.g., corresponding to the example machine-readable instructions of FIG. 10) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

In a cloud and/or edge-based environment, workload performance and/or efficiency of the devices operating in the environment may be dependent on hardware feature configuration of the devices. For example, workload performance and/or efficiency of a cloud and/or edge device may be different when data prefetching is on or off. In some examples, artificial intelligence (AI) (e.g., machine learning (ML), deep learning (DL), etc.) algorithms can be used to find the best hardware configuration for a workload. Typically, a specific (fixed) hardware configuration is identified for the entire duration of the workload. However, different hardware configurations (also referred to as settings or hardware settings) can be more suitable (e.g., faster, more efficient, more accurate, etc.) for different phases in a workload. Even though traditional techniques select an action that performs best for one or more workloads, traditional techniques don't account for the fact that different settings may be more optimal for particular portions of a workload.
Examples disclosed herein identify a group of hardware configurations and/or settings to be provided to edge devices to allow the edge devices, cloud devices, and/or any other device that executes workloads multiple options for optimizing workload execution at a portion level. Examples disclosed herein explore parts of the entire hardware setting space (e.g., Model Specific Registers (MSR) bits) at workload runtime to reduce the hardware setting space to a small number of dominating settings and/or combination of settings (e.g., actions), which can then be applied dynamically by edge devices in real-time to improve workload performance and/or efficiency.
Examples disclosed herein generate the reduced actions space for the agent (e.g., an edge or cloud device that can execute a workload) to be able to explore and exploit in a reasonable time after the workload is stabilized at some work point. Examples disclosed herein allow for the resulting data sets to be used as input for further significant action space filtering that will be used by online-tuning agents. The reduced action space allows an agent to find the best working point (explore and eventually exploit for high rewards). Because the action space may be large, examples disclosed herein reduce the action space by finding/selecting "winning" actions that are determined to make an impact on workload target (e.g., instructions per cycle/second/joule (IPC/IPS/IPJ)).

Examples described herein determine the group of actions by leveraging the fact that a single setting resulting in a good workload performance will result in a high probability that an action including the setting in combination with other setting(s) having a good workload performance. Accordingly, examples disclosed herein can initially test a workload based on single setting actions and filter out actions with poor performance (which will have a high likelihood of poor performance regardless of being combined with other settings). In this manner, examples disclosed herein can identify a group of actions (e.g., combinations of settings) that result in good workload performance using less time and resources than brute force methods that run workloads for many or all combinations within an action space.

Examples disclosed herein yield performance and/or efficiency improvements for workloads with minimal additional cost. Additionally, traditional techniques of selecting candidate actions are based on expert knowledge and not by learning from data which is error prone due to possible overlook of some actions space that might be valuable. Also, because the action space can be very large, experts may not encompass all the action space domain to search in the first place.

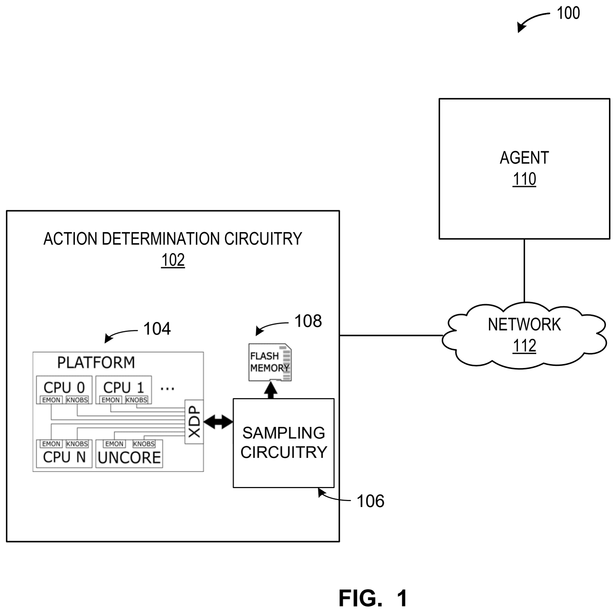

FIG. 1 is an example environment 100 that includes example settings determination circuitry 102 including an example platform 104, example sampling circuitry 106, and example memory 108. The example environment 100 further includes an example agent 110 and an example network 112. In some examples, settings determination circuitry 102 and the agent 110 could be combined into a single device/server.

The action determination circuitry 102 of FIG. 1 may be a computing device, a server, a cloud or edge-based device, etc. The action determination circuitry 102 analyzes the execution of one or more workloads while different actions (e.g., single settings and/or combinations of settings) are enabled/disabled. The settings may include prefetching, fast string, enhanced speed-step technology, turbo mode, level 2 (L2) hardware prefetching, L2 adjacent cache line prefetching, data cache unit (DCU) hardware prefetching, DCU instruction point (IP) perfecting, adaptive multi-stream (AMP) prefetching, etc. After a group of actions has been generated that provide better results (e.g., speed, performance, efficiency, etc.) than other actions, the action determination circuitry 102 outputs the set of actions to the agent 110 for use in real-time workload execution.

The action determination circuitry 102 of FIG. 1 includes the platform 104 to run workload using platform resources (e.g., central processing unit CPU(s), core(s), uncore(s), etc.) based on various actions (e.g., one or more combinations of settings being enabled/disabled). The platform 104 runs a workload with particular settings or particular combinations of settings enabled per the instructions of the sampling circuitry 106. The platform 104 outputs the results of and/or data related to a workload run (also referred to as a sweep) to the sampling circuitry 106 for analysis.

The sampling circuitry 106 of FIG. 1 determines a group of actions (e.g., settings and/or combination of settings enabled while running the workload) that results in good workload performance (e.g., speed, efficiency, accuracy, etc.). The sampling circuitry creates a small action space from the total action space. The total action space is all the different combination of settings that can be enabled for a workload run. The total action space can be very large. Accordingly, the sampling circuitry 106 generates a small action space that leverages the high probability that poor performance of a single setting will result in poor performance of a combination that uses the single setting. Accordingly, the sampling circuitry 106 can start with an initial set of single setting actions and filter out settings that result in poor performance. After the initial small action space is generated, the sampling circuitry 106 can generate a new small action space including combinations (e.g., two settings enabled) of the remaining settings. In this manner, the sampling circuitry 106 can identify good performance action with a fraction of the workload runs needed to test the total action space.

After the sampling circuitry 106 of FIG. 1 determines the small action space, the sampling circuitry 106 instructs the platform 104 to run one or more workloads for each of the actions in the small action space. For example, if a first action corresponds to enabling only prefetching, the sampling circuitry 106 will instruct the platform 104 to run a workload while prefetching is enabled. The sampling circuitry 106 obtains a report corresponding the results and/or corresponding data of running the workload based on the actions of the small action space. The sampling circuitry 106 processes the report(s) to determine which actions of the small action space result in the highest performance. The target performance that the sampling circuitry 106 is determining may be based on user and/or manufacturer preferences (e.g., one or more of speed, efficiency, accuracy, power consumption, etc.). As further described below, the sampling circuitry 106 can read test run data files, configure global run parameters for building desired data (e.g., filtering specific workloads/targets), pre-process; extract; filter; and organize the data into matrices, fit the data with target performance measurements (e.g., IPC/IPS/IPJ), plot the results, and filter out actions based on the results. The sampling circuitry 106 can store the selected group of actions in the memory 108. In the example of FIG. 1, the memory 108 is flash memory. However, the memory 108 can be any type of memory. Additionally, the sampling circuitry 106 transmits the selected group of actions to the agent 110 via the network 112.

The agent 110 of FIG. 1 is a computing device, server, cloud or edge-based device, etc. that executes workloads. The agent 110 obtains the group of actions from the action determination circuitry 102. While executing a workload, the agent 110 can select from one of the actions when performing a portion of a workload. The agent 110 can improve workload performance by dynamically tuning knobs in real time, without user intervention, based on the actions. The agent 110 can apply the actions based on the portion of the workload, availability and/or capacity of the agent 110, and/or any other data.

The example network 112 of FIG. 1 is a system of interconnected systems exchanging data. The example network 112 may be implemented using any type of public or private network such as, but not limited to, the Internet, a telephone network, a cellular network, a local area network (LAN), a wide area network (WAN), mobile broadband, a 3GPP network, a cable network, and/or a wireless network. To enable communication via the network 112, the example computing devices and/or servers 102, 108, 114, 118, 122, 132 may include a communication interface that enables a connection to an Ethernet, a digital subscriber line (DSL), Fiber Optic connections, Satellite Internet, a telephone line, a coaxial cable, or any wireless connection, etc. In some examples, the example computing devices and/or servers 102, 108, 114, 118, 122, 132 are connected via the example network 112.

While an example manner of implementing the action determination circuitry 102 is illustrated in FIG. 1, one or more of the elements, processes, and/or devices illustrated in FIG. 1 may be combined, divided, re-arranged, omitted, eliminated, and/or implemented in any other way. Further, the platform 104, the sampling circuitry 106, and/or more generally, the action determination circuitry 102 of FIG. 1, may be implemented by hardware alone or by hardware in combination with software and/or firmware. Thus, for example, any of the platform 104, the sampling circuitry 106, and/or more generally, the action determination circuitry 102 of FIG. 1, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the platform 104, the sampling circuitry 106, and/or more generally, the action determination circuitry 102 of FIG. 1 may include one or more elements, processes, and/or devices in addition to, or instead of, those illustrated in FIG. 1, and/or may include more than one of any or all of the illustrated elements, processes, and devices.

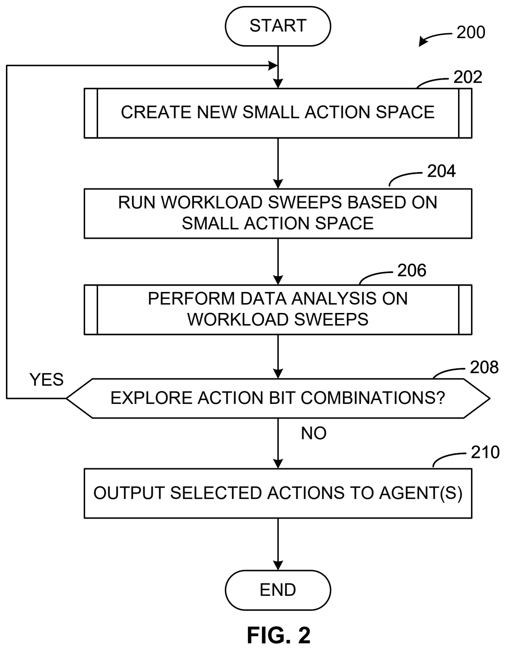

Flowchart(s) representative of example machine-readable instructions, which may be executed by programmable circuitry to implement and/or instantiate the platform 104, the sampling circuitry 106, and/or more generally, the action determination circuitry 102 of FIG. 1 and/or representative of example operations which may be performed by programmable circuitry to implement and/or instantiate the platform 104, the sampling circuitry 106, and/or more generally, the action determination circuitry 102 of FIG. 1, is shown in FIGS. 2-6. The machine-readable instructions may be one or more executable programs or portion(s) of one or more executable programs for execution by programmable circuitry such as the programmable circuitry 1012 shown in the example processor platform 1000 discussed below in connection with FIG. 10 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 2-6, many other methods of implementing the action determination circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an

EP 4 745 783 A1

ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable, and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, Go Lang, PyTorch, Rust, etc.

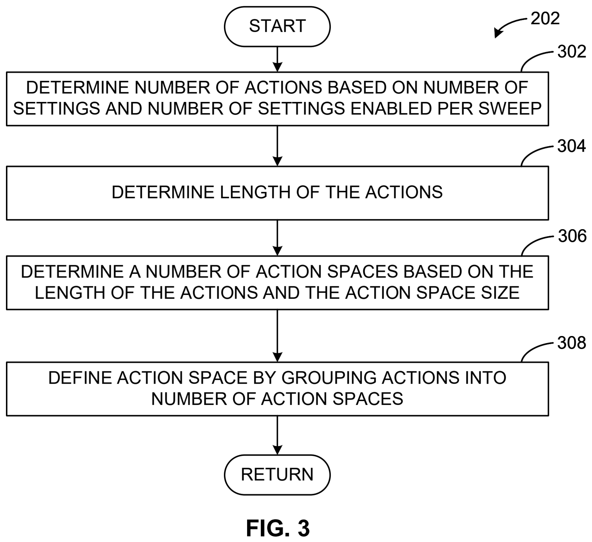

As mentioned above, the example operations of FIG. 3 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or operations, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or operations, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, one or more data processing units (DPUs), one or more edge processing units (EPUs), one or more infrastructure processing units (IPUs), etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

FIG. 2 is a flowchart representative of example machine-readable instructions and/or example operations 300 that may be executed, instantiated, and/or performed by programmable circuitry(ies) to reduce an action pace for workload execution. For example, the example operations 200 may be executed, instantiated, and/or performed by at least one of the action determination circuitry 102, the platform 104, and/or the sampling circuitry 106. The example machine-readable instructions and/or the example operations 200 of FIG. 2 begin at block 202, at which the sampling circuitry 106 creates a new small action space from the total action set, as further described below in conjunction with FIG. 3. As further described below, during the initial generation of the small action space, each action corresponds to a single setting being enabled. However, after a second or third iteration, the actions may include combinations (e.g., two or more) settings that are enabled.

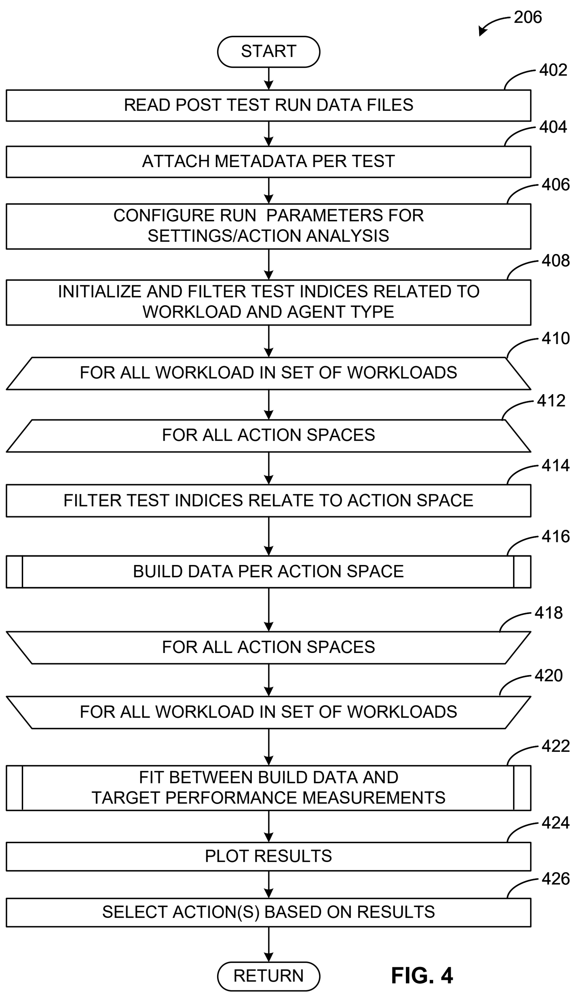

At block 204, the sampling circuitry 106 instructs the platform 104 to run workload sweeps based on the small action space. For example, the sampling circuitry 106 instructions the platform 104 to run one or more workloads, each run being based on an action of the small action space. For example, if an action corresponding to enabling a first setting and a second setting, the platform 104 will run the workload with the first and second setting enabled. At block 206, the sampling circuitry 106 performs data analysis on the results of the workload sweeps, as further described below in conjunction with FIGS. 4-6. At block 208, the sampling circuitry 106 determines whether to explore action bit combination. As described above, for the initial iteration, the action space is based on actions that correspond to single settings being enabled. However, additional iteration(s) can be performed (e.g., at the expense of time and resources) for combinations of the settings of the remaining actions of the action space after actions have been filtered out at block 202.

If the sampling circuitry 106 is to explore action bit combinations (block 208: YES), control returns to block 202 to analyze bit combinations (e.g., combination of the remaining settings). If the sampling circuitry 106 is not to explore action bit combinations (or if a sufficient number of the action bit combinations have already been explored) (block 208: NO), the sampling circuitry 106 outputs the selected actions to the agent 110 via the network 112 (block 210).

FIG. 3 is a flowchart representative of example machine-readable instructions and/or example operations 300 that may be executed, instantiated, and/or performed by programmable circuitry(ies) to create a new small action space. For example, the example operations 202 may be executed, instantiated, and/or performed by at least one of the sampling circuitry 106. The example machine-readable instructions and/or the example operations 202 of FIG. 3 begin at block 302, at which the sampling circuitry 106 determines the number of actions in the total action space based on the number of settings (n_bits or n) available for the platform 104/agent 110 and the number of settings enabled per sweep for an action (hamming_distance or r) based on a combination calculation. For example, if the number of actions in the total space is 10 and the number of settings enabled per sweep is 1 then the number of actions will be to (e.g.,

$$nCr = \frac{n!}{r!(n-r)!} = \frac{10!}{1!(9)!} = 10$$ different actions). If the number of actions in the total space is 10 and the number of settings enabled per sweep is 2 then the number of actions will be to (e.g., $$nCr = \frac{10!}{1!(9)!} + \frac{10!}{2!(8)!} = 55$$ different

actions).

At block 304, the sampling circuitry 106 determines a length of the actions. At block 306, the sampling circuitry 106 determines a number of action spaces based on the length of the actions and the action space size (e.g., the number of actions divided by the action space size). At block 308, the sampling circuitry 106 defines the action space by grouping actions into the number of action spaces. After block 308, control returns to block 204 of FIG. 2.

The below Table 1 includes example pseudocode corresponding to the instructions of FIG. 3.

| Table 1 - Pseudocode |
| --- |
| **procedure** CREATE_ACTION_SPACES(*n_bits,action_space_size, hamming, distance*)<br>    actions←EXTRACT_ACTIONS(*n_bits, hamming, distance*)<br>    *num_of_actions←length(actions)*<br>    *num_of_actions_spaces←[num_of_actions/action_space_size]*<br>    *action_spaces←* split *actions* to small *action_spaces* where each has *action_space_size* different actions (the last one has the remainder)<br>**end procedure** |

FIG. 4 is a flowchart representative of example machine-readable instructions and/or example operations 300 that may be executed, instantiated, and/or performed by programmable circuitry(ies) to perform data analysis on the workload sweeps. For example, the example operations 206 may be executed, instantiated, and/or performed by at least one of the sampling circuitry 106. The example machine-readable instructions and/or the example operations 206 of FIG. 3 begin at block 402, at which the sampling circuitry 106 reads the post test run data files (e.g., reports corresponding to the executed workload runs for the different actions). The post test run data files include information related to the performance of the workload for the different actions. For example, the post run data file may include a matrix with information in a particular row that relates to a particular workload run (e.g., including time to execute, number of instructions, joules, branch misses, action pace, active action, etc.)

At block 406, the sampling circuitry 106 configure the run parameters for the settings/action analysis. For example, the sampling circuitry 106 can define and filter the workloads that are of interest, define and filter the targets of interest (e.g., IPC/IPS/IPJ), build the action space descriptors (e.g., per action space that was tested) and initial default action properties.

The below Table 2 includes example pseudocode corresponding to blocks 406.

| Table 2 - Pseudocode |
|---|
| **procedure** CONFIGURE<br>    *Workloads*←Define and filter the workloads we want to learn from<br>    *Targets* ← Define and filter the targets we want to learn from<br>    *ActionSpaceDescriptors* ← Build the action space descriptor (per action space that we tested we build its properties)<br>    Initialize default action properties (no actual action)<br>**end procedure** |

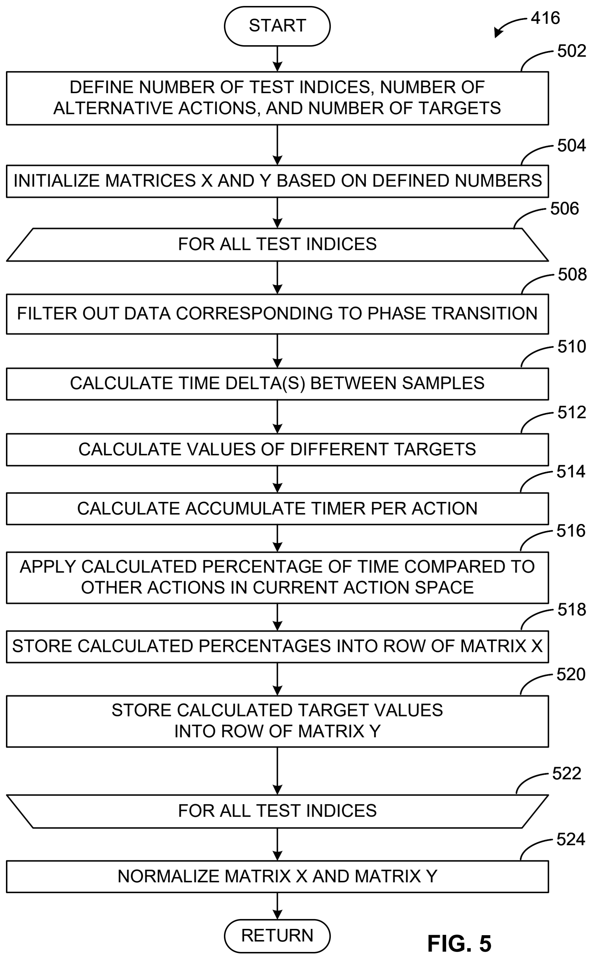

At block 408, the sampling circuitry 106 initializes and filters the test indices related to the workload and agent type. An agent type is a type of agent that has been used to govern the machine while the workload/experiments were running. For all workloads in the set of workloads (block 410-420) and for all action spaces analyzed (blocks 412-418), the sampling circuitry 106 filters test indices (e.g., test results from a particular workload for particular actions by a particular agent) related to the action space (block 414). For example, the sampling circuitry 106 filters out all test indices that are not related to the current action space based on an action space identifier present in tabular data columns of the post test run data files. At block 416, the sampling circuitry 106 builds (e.g., generated, determines, etc.) data per action space, as further described below in conjunction with FIG. 5.

The below Table 3 includes example pseudocode corresponding to blocks 408-420.

| Table 3 – Pseudocode |
|---|
| **procedure** BUILD_DATA ( )<br>    *Workloads, ActionSpaces, Targets, agent_type* [[Define and Initilze what is wanted to inspect]]<br>        **for all** *wkl* ∈*Workloads* do<br>            Initialize and Filter *TestIndices* related to *wkl* and *agent_type*<br>            BUILD_DATA_PER_WORKLOAD( )<br>        **end for**<br>**end procedure**<br><br><br>**procedure** BUILD_DATA_PER_WORKLOAD ( )<br>    **for all** *action_space* ∈*ActionSpaces* do<br>        Filter *TestIndices* related to current *action_space*<br>        BUILD_DATA_PER_ACTION_SPACE( )<br>    **end for**<br>**end procedure** |

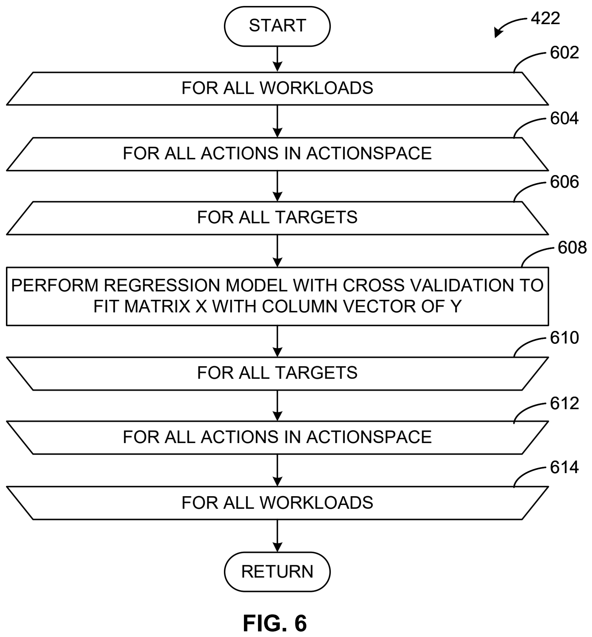

At block 422, the sampling circuitry 106 fits between the build data and the target performance measurements, as further described below in conjunction with FIG. 6. As used herein, fit is also referred to as regression. For example, the sampling circuitry 106 builds a predictive model M with parameter vector weights which can predict Y values based on X rows (e.g., M (X, weights) = Y + noise. Fitting may include finding appropriate parameter vector weights.

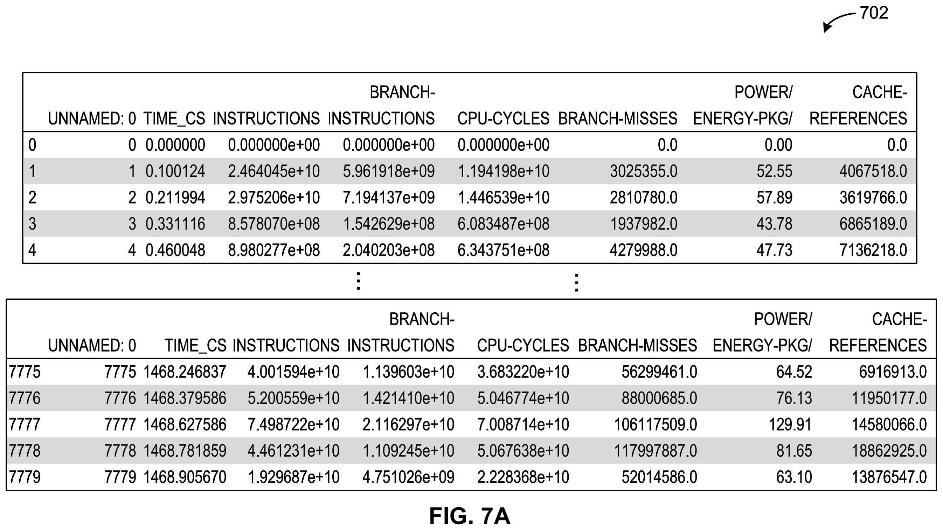

At block 424, the sampling circuitry 106 plots the results to represent the performance of the actions in the action space. An example of plots and/or output data is further described below in conjunction with FIGS. 7A-9C. At block 426, the sampling circuitry 106 selects action(s) based on the results. For example, the sampling circuitry 106 can select actions based on the plots to generate the best performing actions for a particular performance target (e.g., IPC/IPS/IPJ). In some examples, the sampling circuitry 106 can select the actions by thresholding in order to extract per target the 4-6 single bit settings for the next stage of action space exploration (e.g., for different combinations of settings.

The below Table 4 includes example pseudocode corresponding to the instructions of FIG. 4.

| Table 4 - Pseudocode |
| --- |
| **procedure** MAIN_DATA_ANALYSIS_PROCEDURE( )<br>    READ_DATE( ) [[read the post tests run data filed]]<br>    CONFIGURE( ) [[configure global run parameters for building the wanted data (for example filtering specific workloads/targets)]]<br>    BUILD_DATA ( ) [[pre-process, extract, filter, and organize the data]]<br>    FIT( ) [[Fit between the data and target performance measurements]]<br>    POST_PROCESS( ) [[Plot, filter winner actions and plan next action spaces for the next test' run sweep]]<br>**end procedure** |

FIG. 5 is a flowchart representative of example machine-readable instructions and/or example operations 416 that may be executed, instantiated, and/or performed by programmable circuitry(ies) to build data per action space. For example, the example operations 416 may be executed, instantiated, and/or performed by at least one of the sampling circuitry 106. The example machine-readable instructions and/or the example operations 416 of FIG. 3 begin at block 502, at which the sampling circuitry 106 defines the number of test indices, the number of alternative actions, and the number or targets based on the post run test files (e.g., the number of rows of relevant data after filtering).

At block 504, the sampling circuitry 106 initializes matrices X and Y based on the defined numbers defined in blocks 502. For example, the sampling circuitry 106 may generate the X matrix to be a zero matrix with a number of rows based on the number of tests and the number of columns based on the number of targets. Additionally, the sampling circuitry 106 may generate the Y matrix to be a zero matric with a number of rows based on the number of test and a number of columns based on the number of targets.

For all test indices (block 506-522), the sampling circuitry 106 filters out data corresponding to a phase transition and/or other portions where performance measurements are not stabilized (block 508) because data from phase transitions may be misleading. For example, the agent 110 may provide information about stable/transition phases. At block 510, the sampling circuitry 106 calculates time delta(s) between samples. A sample is a single row of measured data (e.g., time, instructions , m_cycles, joules, branch_misses, action_space, active_action, etc.) corresponding to results of a single workload for a single action. Thus, the sampling circuitry 106 can calculated the time delta based on the time data in two consecutive rows and assign a value to correct the action index. At block 512, the sampling circuitry 106 calculates values of different targets. The values of targets or target values is the total instructions per second for the entire workload run (e.g., the last value of the instructions column divided by the last value of the time column of a post run matrix. At block 514, the sampling circuitry 106 calculates the accumulated time per action based on the calculated time deltas. For example, the agent may choose action(s) dynamically (e.g., according to an agent program, policy, etc.). The chosen action(s) may be designed to choose beneficial (e.g., in terms of target signal) actions more often. Time in action is the sum of the time deltas when the action was active. The agent should be designed to automatically handle exploration vs exploitation. For example, the agent should select random actions, learn action outcomes online, and gradually apply more beneficial actions over time.

At block 516, the sampling circuitry 106 apply calculated percentage of time compared to other actions in the current action space. The percentage of time for a particular action is included in the post test run file. Thus, the sampling circuitry 106 can use the accumulated time per action chosen by an agent to determine the percentage of time compared to other actions in the current action space. At block 518, the sampling circuitry 106 stores the calculated percentages into row of matrix X. At block 520, the sampling circuitry 106 stores the calculated target values into rows of the matrix Y. At block 522, the sampling circuitry 106 normalizes matrix X and matrix Y. The Matrix X includes a row per workload run, where each column represents the percentage of time spent in each action during the run. The Matrix Y includes target values for the workload run, corresponding to the Matrix X row.

The below Table 5 includes example pseudocode corresponding to the instructions of FIG. 5.

---

**Table 5 - Pseudocode**

---

**procedure** BUILD_DATA_PER_ACTION_SPACE ( )
    *num_of_tests* ← number of *TestIndices*
    *num_of_actions* ← number of Alternative actions
    *num_of_targets* ← number of *Targets*
    $X$ [[*Zero X* $\in \mathbb{R}^{num\_of\_tests \times num\_of\_actions}$]]
    $Y$ [[*Zero Y* $\in \mathbb{R}^{num\_of\_tests \times num\_of\_targets}$]]

    **for all** *test_index* $\in$ *TestIndices* do
        Filter times in which phase transition was detected
        Calculate time deltas between samples
        Calculate different targets' values
        Calculate accumulated time per action chosen by the agent
        *X_test_row* ← Calculate the percentage of time compared to other
actions in current action space
        *Y_test_row* ← Calculate the target values in the current test
        Add *X_test_row, Y_test_row* to X, Y respectively
    **end for**
    Normalize X, Y matrices values
**end procedure**

---

FIG. 6 is a flowchart representative of example machine-readable instructions and/or example operations 422 that may be executed, instantiated, and/or performed by programmable circuitry(ies) to fit between build data and target performance measurements. For example, the example operations 422 may be executed, instantiated, and/or performed by at least one of the sampling circuitry 106. The example machine-readable instructions and/or the example operations 422 of FIG. 3 begin for all workloads (blocks 602-614), for all actions in the action space (blocks 604-613), and for all targets (blocks 606-610), at which the sampling circuitry 106 performs a regressions model with cross validation to fit matrix X with a column vector of matrix Y to generate a set of weights (block 608). For example, the sampling circuitry 106 builds a predictive model M with parameter vector weights which can predict Y values based on X rows (e.g., M (X, weights) = Y + noise. Fitting may include finding appropriate parameter vector weights. The weights are the result of the fitting procedure (e.g., Lasso regression with a polynomial as a model and polynomial parameters as the weights). The output of the flowchart of FIG. 6 is a vector of weights, each weight corresponding to a signal action (e.g., higher the weight, better the action).

The below Table 6 includes example pseudocode corresponding to the instructions of FIG. 6.

---

**Table 6 - Pseudocode**

---

**procedure** FIT ( )
    **for all** *wkl* $\in$ *Workloads* do
        **for all** *action_space* $\in$ *ActionSpaces* do
            **for all** *tgt* $\in$ *Targets* do
                *weights* ← Fit X matrix with Y[:, tgt] column vector by using Ridge
regression with cross validation, Other methods of regressions like Lasso/Elastic
Net/Hetero were tested
            **end for**
        **end for**
    **end for**
**end procedure**

---

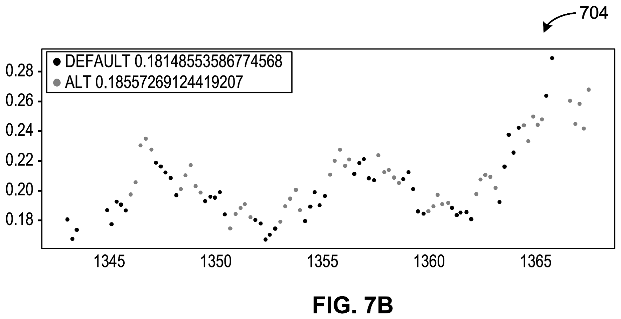

FIGS. 7A and 7B illustrate an example of input data gathered from the platform 104 for a particular workload test run. FIG. 7A includes an example table 702 that has example data that may be obtained from a workload test run based on various different actions (e.g., actions 0-7779). The table 702 includes an amount of time that has occurred since the workload execution started, a number of instructions executed per sampling period, a number of branch instructions executed per workload, a number of CPU cycles per sampling period, a number of branch misses per sampling period, an amount of power/energy expended per sampling period, and a number of cache references per sampling period. FIG. 7B is an example plot 704 of the target signal (e.g., in this example instructions per cycle) versus time (e.g., with respect to a time interval). Thus, the x axis of the plot 704 corresponds to time and the y axis of the plot 704 corresponds to instructions per cycle. However, the y-axis could represent a different target signal.

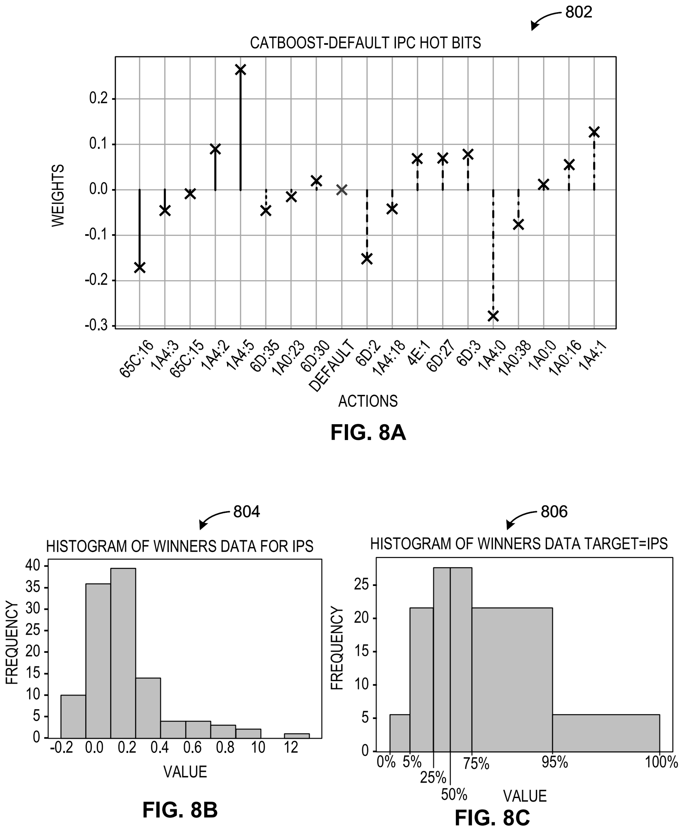

FIG. 8A, 8B, and 8C illustrate representations of the weights generated by the sampling circuitry 106 when performing the fitting routine of FIG. 6. FIG. 8A includes a first plot representation 802 that plots the generated weights for each action. FIG. 8B includes an example histogram representation 804 of the frequency of each weight value of the winning/selected actions. FIG. 8C includes an example histogram representation 806 of the percentile of the weights of the winning/selected actions. The representations 802, 804, 806 provide a visualization of the action correlation for each action space with a specific target. For example, the plot representation 802 illustrates the IPC target correlation weights with each action for the for a particular workload (e.g., catboost). The fit was done for each action space separately to provide a simple linear model. The representations 802, 804, 806 correspond to a single bit action (e.g., an action corresponding to a single setting being enabled). In some examples, the sampling circuitry 106 can select the group of actions based on the histogram representation(s) 804, 806 of the winning/selected events (e.g., based on the highest weights, the weights above a threshold, etc.). As described above, the sampling circuitry 106 can generate a group of actions per performance target. In some examples, the sampling circuitry 106 may select the final selection of actions by thresholding to extract per target the target number of single bit actions for a subsequent action space exploration including actions with two or more setting enabled. The histogram representation 804, 806 illustrate how much the winner actions were significant relative to the others.

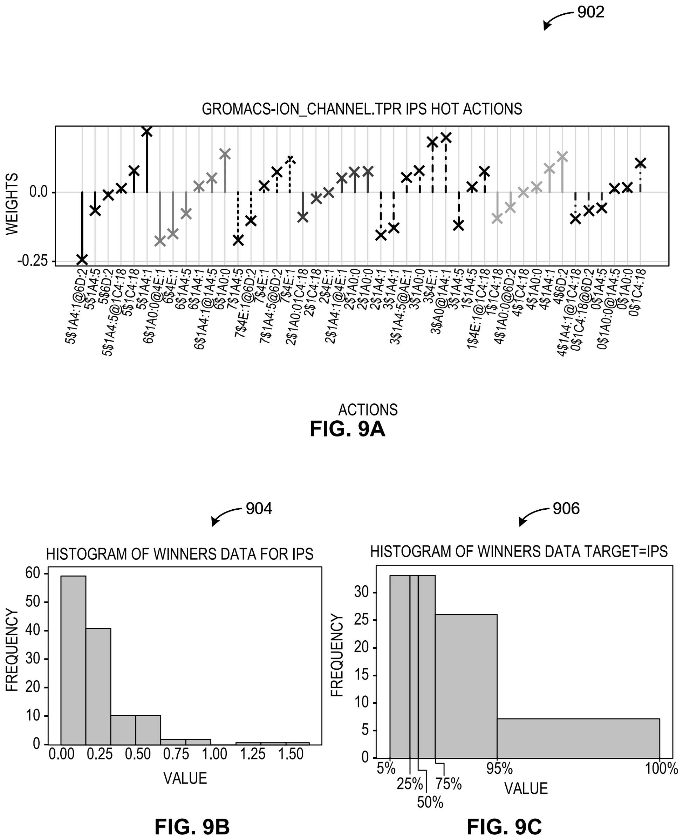

FIG. 9A, 9B, and 9C illustrate representations of the weights generated by the sampling circuitry 106 when performing the fitting routine of FIG. 6 for a second iteration involving workload test runs for combinations of settings that remain after the first iteration of filtering. FIG. 9A includes a first plot representation 902 that plots the generated weights for each action. FIG. 9B includes an example histogram representation 904 of the frequency of each weight value of winning/selected actions. FIG. 9C includes an example histogram representation 906 of the percentile of the weights of winning/selected actions. The representations 902, 904, 906 provide a visualization of the action correlation for each action space with a specific target. For example, the plot representation 902 illustrates the IPC target correlation weights with each action for the for a particular workload (e.g., catboost). The fit was done for each action space separately to provide a simple linear model. The representations 902, 904, 906 correspond to a single bit action (e.g., an action corresponding to a single setting being enabled). In some examples, the sampling circuitry 106 can select the group of actions based on the histogram representation(s) 904, 906 of the winning/selected events (e.g., based on the highest weights, the weights above a threshold, etc.). As described above, the sampling circuitry 106 can generate a group of actions per performance target. The histogram representation 904, 906 illustrate how much the winner actions were significant relative to the others.

FIG. 10 is a block diagram of an example programmable circuitry platform 1000 structured to execute and/or instantiate the example machine-readable instructions and/or the example operations of FIGS. 2-6 to implement at least one of the security server 102, the resource owner processing device 108, the authorization server 114, the resource requesting processing device 118, the blockchain platform server 122, and/or the machine learning implementation processing device 132 of FIG. 1. The programmable circuitry platform 1000 can be, for example, a server, a personal computer, a workstation, a self-learning machine (e.g., a neural network), or any other type of computing and/or electronic device.

The programmable circuitry platform 1000 of the illustrated example includes programmable circuitry 1012. The programmable circuitry 1012 of the illustrated example is hardware. For example, the programmable circuitry 1012 can be implemented by one or more integrated circuits, logic circuits, FPGAs, microprocessors, CPUs, GPUs, DSPs, DPUs, EPUs, IPUs and/or microcontrollers from any desired family or manufacturer. The programmable circuitry 1012 may be implemented by one or more semiconductor based (e.g., silicon based) devices. In this example, the programmable circuitry 1012 implements the platform 104 and the sampling circuitry 106 of FIG. 1.

The programmable circuitry 1012 of the illustrated example includes a local memory 1013 (e.g., a cache, registers, etc.). The programmable circuitry 1012 of the illustrated example is in communication with main memory 1014, 1016, which includes a volatile memory 1014 and a non-volatile memory 1016, by a bus 1018. The volatile memory 1014 may be implemented by Synchronous Dynamic Random Access Memory (SDRAM), Dynamic Random Access Memory (DRAM), RAMBUS® Dynamic Random Access Memory (RDRAM®), High Bandwidth Memory (HBM), and/or any other type of RAM device. The non-volatile memory 1016 may be implemented by flash memory and/or any other desired type of memory device. Access to the main memory 1014, 1016 of the illustrated example is controlled by a memory controller 1017. In some examples, the memory controller 1017 may be implemented by one or more integrated circuits, logic circuits, microcontrollers from any desired family or manufacturer, or any other type of circuitry to manage the flow of data going to and from the main memory 1014, 1016. Any one or more of the main memory 1014, 1016 or the local memory 1013 can implement one or more of the memory 130 of FIG. 1.

The programmable circuitry platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1022 are connected to the interface circuitry 1020. The input device(s) 1022 permit(s) a user (e.g., a human user, a machine user, etc.) to enter data and/or commands into the programmable circuitry 1012. The input device(s) 1022 can be implemented by, for example, a keyboard, a button, a mouse, and/or a touchscreen.

One or more output devices 1024 are also connected to the interface circuitry 1020 of the illustrated example. The output device(s) 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), and/or speaker. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The network 1026 may be the network 112 of FIG. 1. The communication can be by, for example, an Ethernet connection, a digital subscriber line (DSL) connection, a telephone line connection, a coaxial cable system, an optical fiber connection, a satellite system, a beyond-line-of-sight wireless system, a line-of-sight wireless system, a cellular telephone system, an optical connection, etc.

The programmable circuitry platform 1000 of the illustrated example also includes one or more mass storage discs or devices 1028 to store firmware, software, and/or data. Examples of such mass storage discs or devices 1028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1032, which may be implemented by the machine-readable instructions of FIGS. 2-6, may be stored in the mass storage device 1028, in the volatile memory 1014, in the non-volatile memory 1016, and/or on at least one non-transitory computer readable storage medium such as a CD or DVD which may be removable.

A block diagram illustrating an example software distribution platform 1105 to distribute software such as the example machine-readable instructions 1032 of FIG. 10 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine-readable instructions 1032 of FIG. 10. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine-readable instructions 1032, which may correspond to the example machine-readable instructions of FIG. 3, as described above. The one or more servers of the example software distribution platform 1105 are in communication with an example network 1110, which may correspond to the network 112 of FIG. 1. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 1032 from the software distribution platform 1105. For example, the software, which may correspond to the example machine-readable instructions of FIG. 3, may be downloaded to the example programmable circuitry platform 1000 which is to execute the machine-readable instructions 1032 to implement the processor circuitry 1012. In some examples, one or more servers of the software distribution platform 1105 periodically offer, transmit, and/or force updates to the software (e.g., the example machine-readable instructions 1032 of FIG. 10) to ensure improvements, patches, updates, etc., are distributed and applied to the software at the end user devices. Although referred to as software above, the distributed "software" could alternatively be firmware.

Example methods, apparatus, systems, and articles of manufacture to reduce an action space for workload execution are disclosed herein. Further examples and combinations thereof include the following: Example 1 includes an apparatus comprising interface circuitry, machine-readable instructions, and at least one programmable circuit to at least one of execute or instantiate the machine-readable instructions to at least analyze workload runs for a plurality of combinations of enabled setting to determine a subset of the plurality of combinations that satisfy a target performance metric, run a workload for a second combination of enabled settings to generate a result, the second combination combining enabled settings from two or more of the subset of the plurality of combinations, analyze the result to determine the second combination satisfies the target performance metric, and deploy the second combination and the subset of the plurality of combinations to a device to process a second workload using at least one of the second combination of the subset of the plurality of combinations.

Example 2 includes the apparatus of example 1, wherein each combination of the plurality of combinations corresponds to one setting being enabled and remaining settings being disabled.

Example 3 includes the apparatus of example 1, wherein one or more of the at least one programmable circuit is to analyze the workload runs by, for each workload run corresponding to one of the plurality of combinations determining a time delta between consecutive samples, determining a total instructions per second for the workload run, determining accumulated times per action based on the time delta, determining a percentage of time of an action compared to other workload runs based on first results of the workload runs, generating a first matrix based on the percentage of time, and generating a second matrix based on the total instructions per second.

Example 4 includes the apparatus of example 3, wherein one or more of the at least one programmable circuit is to filter out data when a phase transition is detected prior to determining the time delta.

Example 5 includes the apparatus of example 3, wherein one or more of the at least one programmable circuit is to generate weights by fitting the first matrix with data from the second matrix using a regression protocol with cross validation, each weight corresponding to a combination of settings.

Example 6 includes the apparatus of example 5, wherein one or more of the at least one programmable circuit is to select the subset of combinations of enabled settings based on the weights.

Example 7 includes the apparatus of example 5, wherein one or more of the at least one programmable circuit is to select the subset of combinations of enabled settings based on a correlation between each combination selection percentage to a performance of each workload run.

Example 8 includes a non-transitory machine-readable medium comprising instructions to cause programmable circuitry to at least analyze workload runs for a plurality of combinations of enabled setting to determine a subset of the plurality of combinations that satisfy a target performance metric, run a workload for a second combination of enabled settings to generate a result, the second combination combining enabled settings from two or more of the subset of the plurality of combinations, analyze the result to determine the second combination satisfies the target performance metric, and deploy the second combination and the subset of the plurality of combinations to a device to process a second workload using at least one of the second combination of the subset of the plurality of combinations.

Example 9 includes the non-transitory machine-readable medium of example 8, wherein each combination of the plurality of combinations corresponds to one setting being enabled and remaining settings being disabled.

Example 10 includes the non-transitory machine-readable medium of example 8, wherein the instructions cause the programmable circuitry to at least analyze the workload runs by, for each workload run corresponding to one of the plurality of combinations determining a time delta between consecutive samples, determining a total instructions per second for the workload run, determining accumulated times per action based on the time delta, determining a percentage of time of an action compared to other workload runs based on first results of the workload runs, generating a first matrix based on the percentage of time, and generating a second matrix based on the total instructions per second.

Example 11 includes the non-transitory machine-readable medium of example 10, wherein the instructions cause the programmable circuitry to at least filter out data when a phase transition is detected prior to determining the time delta.

Example 12 includes the non-transitory machine-readable medium of example 10, wherein the instructions cause the programmable circuitry to at least generate weights by fitting the first matrix with data from the second matrix using a regression protocol with cross validation, each weight corresponding to a combination of settings.

Example 13 includes the non-transitory machine-readable medium of example 12, wherein the instructions cause the programmable circuitry to at least select the subset of combinations of enabled settings based on the weights.

Example 14 includes the non-transitory machine-readable medium of example 12, wherein the instructions cause the programmable circuitry to at least select the subset of combinations of enabled settings based on a correlation between each combination selection percentage to a performance of each workload run.

Example 15 includes a method comprising analyzing, by executing an instruction with programmable circuitry, workload runs for a plurality of combinations of enabled setting to determine a subset of the plurality of combinations that satisfy a target performance metric, running, by executing an instruction with the programmable circuitry, a workload for a second combination of enabled settings to generate a result, the second combination combining enabled settings from two or more of the subset of the plurality of combinations, analyzing, by executing an instruction with the programmable circuitry, the result to determine the second combination satisfies the target performance metric, and deploying, by executing an instruction with the programmable circuitry, the second combination and the subset of the plurality of combinations to a device to process a second workload using at least one of the second combination of the subset of the plurality of combinations.

Example 16 includes the method of example 15, wherein each combination of the plurality of combinations corresponds to one setting being enabled and remaining settings being disabled.

Example 17 includes the method of example 15, wherein the analyzing of the workload runs includes, for each workload run corresponding to one of the plurality of combinations determining a time delta between consecutive samples, determining a total instructions per second for the workload run, determining accumulated times per action based on the time delta, determining a percentage of time of an action compared to other workload runs based on first results of the workload runs, generating a first matrix based on the percentage of time, and generating a second matrix based on the total instructions per second.

Example 18 includes the method of example 17, further including filtering out data when a phase transition is detected prior to determining the time delta.

Example 19 includes the method of example 17, further including generating weights by fitting the first matrix with data from the second matrix using a regression protocol with cross validation, each weight corresponding to a combination of settings.

Example 20 includes the method of example 19, further including selecting the subset of combinations of enabled settings based on the weights.

From the foregoing, it will be appreciated that example systems, apparatus, articles of manufacture, and methods have been disclosed to reduce an action space for workload execution. Examples disclosed herein can identify a group of actions (e.g., combinations of settings) that result in good workload performance using less time and resources than brute force methods that run workloads for many or all combinations within an action space. The reduced action space allows an agent to find the best working point (explore and eventually exploit for high rewards). Because the action space may be large, examples disclosed herein reduce the action space by finding/selecting "winning" actions that are determined to make an impact on workload target (e.g., instructions per cycle/second/joule (IPC/IPS/IPJ)). Thus, disclosed example systems, apparatus, articles of manufacture, and methods are directed to one or more improvement(s) in the operation of a machine such as a computer or other electronic and/or mechanical device.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus comprising:

   interface circuitry;
   machine-readable instructions; and
   at least one programmable circuit to at least one of execute or instantiate the machine-readable instructions to at least:

   analyze workload runs for a plurality of combinations of enabled setting to determine a subset of the plurality of combinations that satisfy a target performance metric;
   run a workload for a second combination of enabled settings to generate a result, the second combination combining enabled settings from two or more of the subset of the plurality of combinations;
   analyze the result to determine the second combination satisfies the target performance metric; and
   deploy the second combination and the subset of the plurality of combinations to a device to process a second workload using at least one of the second combination of the subset of the plurality of combinations.

2. The apparatus of claim 1, wherein each combination of the plurality of combinations corresponds to one setting being enabled and remaining settings being disabled.

3. The apparatus of any one of claims 1-2, wherein one or more of the at least one programmable circuit is to analyze the workload runs by, for each workload run corresponding to one of the plurality of combinations:

   determining a time delta between consecutive samples;
   determining a total instructions per second for the workload run;
   determining accumulated times per action based on the time delta;
   determining a percentage of time of an action compared to other workload runs based on first results of the workload runs;
   generating a first matrix based on the percentage of time; and
   generating a second matrix based on the total instructions per second.

4. The apparatus of claim 3, wherein one or more of the at least one programmable circuit is to filter out data when a phase transition is detected prior to determining the time delta.

5. The apparatus of claim 3, wherein one or more of the at least one programmable circuit is to generate weights by fitting the first matrix with data from the second matrix using a regression protocol with cross validation, each weight corresponding to a combination of settings.

6. The apparatus of claim 5, wherein one or more of the at least one programmable circuit is to select the subset of combinations of enabled settings based on the weights.

7. The apparatus of claim 5, wherein one or more of the at least one programmable circuit is to select the subset of combinations of enabled settings based on a correlation between each combination selection percentage to a performance of each workload run.

8. A method comprising:

analyzing, by executing an instruction with programmable circuitry, workload runs for a plurality of combinations of enabled setting to determine a subset of the plurality of combinations that satisfy a target performance metric;
running, by executing an instruction with the programmable circuitry, a workload for a second combination of enabled settings to generate a result, the second combination combining enabled settings from two or more of the subset of the plurality of combinations;
analyzing, by executing an instruction with the programmable circuitry, the result to determine the second combination satisfies the target performance metric; and
deploying, by executing an instruction with the programmable circuitry, the second combination and the subset of the plurality of combinations to a device to process a second workload using at least one of the second combination of the subset of the plurality of combinations.

9. The method of claim 8, wherein each combination of the plurality of combinations corresponds to one setting being enabled and remaining settings being disabled.

10. The method of any one of claims 8-9, wherein the analyzing of the workload runs includes, for each workload run corresponding to one of the plurality of combinations:

determining a time delta between consecutive samples;
determining a total instructions per second for the workload run;
determining accumulated times per action based on the time delta;
determining a percentage of time of an action compared to other workload runs based on first results of the workload runs;
generating a first matrix based on the percentage of time; and
generating a second matrix based on the total instructions per second.

11. The method of claim 10, further including filtering out data when a phase transition is detected prior to determining the time delta.

12. The method of claim 10, further including generating weights by fitting the first matrix with data from the second matrix using a regression protocol with cross validation, each weight corresponding to a combination of settings.

13. The method of claim 12, further including selecting the subset of combinations of enabled settings based on the weights.

14. The method of claim 12, further including selecting the subset of combinations of enabled settings based on a correlation between each combination selection percentage to a performance of each workload run.

15. Machine-readable storage including machine-readable instructions, when executed, to implement the method of claims 8-12.

**FIG. 1**

START

200

CREATE NEW SMALL ACTION SPACE 202

RUN WORKLOAD SWEEPS BASED ON SMALL ACTION SPACE 204

PERFORM DATA ANALYSIS ON WORKLOAD SWEEPS 206

YES

EXPLORE ACTION BIT COMBINATIONS? 208

NO

OUTPUT SELECTED ACTIONS TO AGENT(S) 210

END

**FIG. 2**

START — 202

— 302

DETERMINE NUMBER OF ACTIONS BASED ON NUMBER OF SETTINGS AND NUMBER OF SETTINGS ENABLED PER SWEEP

— 304

DETERMINE LENGTH OF THE ACTIONS

— 306

DETERMINE A NUMBER OF ACTION SPACES BASED ON THE LENGTH OF THE ACTIONS AND THE ACTION SPACE SIZE

— 308

DEFINE ACTION SPACE BY GROUPING ACTIONS INTO NUMBER OF ACTION SPACES

RETURN

**FIG. 3**

206

START

402
READ POST TEST RUN DATA FILES

404
ATTACH METADATA PER TEST

406
CONFIGURE RUN PARAMETERS FOR
SETTINGS/ACTION ANALYSIS

408
INITIALIZE AND FILTER TEST INDICES RELATED TO
WORKLOAD AND AGENT TYPE

410
FOR ALL WORKLOAD IN SET OF WORKLOADS

412
FOR ALL ACTION SPACES

414
FILTER TEST INDICES RELATE TO ACTION SPACE

416
BUILD DATA PER ACTION SPACE

418
FOR ALL ACTION SPACES

420
FOR ALL WORKLOAD IN SET OF WORKLOADS

422
FIT BETWEEN BUILD DATA AND
TARGET PERFORMANCE MEASUREMENTS

424
PLOT RESULTS

426
SELECT ACTION(S) BASED ON RESULTS

RETURN

**FIG. 4**

START

416

502
DEFINE NUMBER OF TEST INDICES, NUMBER OF ALTERNATIVE ACTIONS, AND NUMBER OF TARGETS

504
INITIALIZE MATRICES X AND Y BASED ON DEFINED NUMBERS

506
FOR ALL TEST INDICES

508
FILTER OUT DATA CORRESPONDING TO PHASE TRANSITION

510
CALCULATE TIME DELTA(S) BETWEEN SAMPLES

512
CALCULATE VALUES OF DIFFERENT TARGETS

514
CALCULATE ACCUMULATE TIMER PER ACTION

516
APPLY CALCULATED PERCENTAGE OF TIME COMPARED TO OTHER ACTIONS IN CURRENT ACTION SPACE

518
STORE CALCULATED PERCENTAGES INTO ROW OF MATRIX X

520
STORE CALCULATED TARGET VALUES INTO ROW OF MATRIX Y

522
FOR ALL TEST INDICES

524
NORMALIZE MATRIX X AND MATRIX Y

RETURN

**FIG. 5**

START

FOR ALL WORKLOADS — 602

FOR ALL ACTIONS IN ACTIONSPACE — 604

FOR ALL TARGETS — 606

PERFORM REGRESSION MODEL WITH CROSS VALIDATION TO FIT MATRIX X WITH COLUMN VECTOR OF Y — 608

FOR ALL TARGETS — 610

FOR ALL ACTIONS IN ACTIONSPACE — 612

FOR ALL WORKLOADS — 614

RETURN

422

**FIG. 6**

EP 4 745 783 A1

702

| UNNAMED: 0 | TIME_CS | INSTRUCTIONS | BRANCH-INSTRUCTIONS | CPU-CYCLES | BRANCH-MISSES | POWER/ENERGY-PKG/ | CACHE-REFERENCES |
|---|---|---|---|---|---|---|---|
| 0 | 0 0.000000 | 0.000000e+00 | 0.000000e+00 | 0.000000e+00 | 0.0 | 0.00 | 0.0 |
| 1 | 1 0.100124 | 2.464045e+10 | 5.961918e+09 | 1.194198e+10 | 3025355.0 | 52.55 | 4067518.0 |
| 2 | 2 0.211994 | 2.975206e+10 | 7.194137e+09 | 1.446539e+10 | 2810780.0 | 57.89 | 3619766.0 |
| 3 | 3 0.331116 | 8.578070e+08 | 1.542629e+08 | 6.083487e+08 | 1937982.0 | 43.78 | 6865189.0 |
| 4 | 4 0.460048 | 8.980277e+08 | 2.040203e+08 | 6.343751e+08 | 4279988.0 | 47.73 | 7136218.0 |

⋮ ⋮

| UNNAMED: 0 | TIME_CS | INSTRUCTIONS | BRANCH-INSTRUCTIONS | CPU-CYCLES | BRANCH-MISSES | POWER/ENERGY-PKG/ | CACHE-REFERENCES |
|---|---|---|---|---|---|---|---|
| 7775 | 7775 1468.246837 | 4.001594e+10 | 1.139603e+10 | 3.683220e+10 | 56299461.0 | 64.52 | 6916913.0 |
| 7776 | 7776 1468.379586 | 5.200559e+10 | 1.421410e+10 | 5.046774e+10 | 88000685.0 | 76.13 | 11950177.0 |
| 7777 | 7777 1468.627586 | 7.498722e+10 | 2.116297e+10 | 7.008714e+10 | 106117509.0 | 129.91 | 14580066.0 |
| 7778 | 7778 1468.781859 | 4.461231e+10 | 1.109245e+10 | 5.067638e+10 | 117997887.0 | 81.65 | 18862925.0 |
| 7779 | 7779 1468.905670 | 1.929687e+10 | 4.751026e+09 | 2.228368e+10 | 52014586.0 | 63.10 | 13876547.0 |

**FIG. 7A**

FIG. 7B

CATBOOST-DEFAULT IPC HOT BITS

FIG. 8A

HISTOGRAM OF WINNERS DATA FOR IPS

FIG. 8B

HISTOGRAM OF WINNERS DATA TARGET=IPS

FIG. 8C

902

GROMACS-ION_CHANNEL.TPR IPS HOT ACTIONS

ACTIONS

**FIG. 9A**

904

HISTOGRAM OF WINNERS DATA FOR IPS

**FIG. 9B**

906

HISTOGRAM OF WINNERS DATA TARGET=IPS

**FIG. 9C**

**FIG. 10**

SOFTWARE
DISTRIBUTION
PLATFORM ⎯ 1105

INSTR
1032

NETWORK ⎯ 1110

PROCESSOR
PLATFORM(S) ⎯ 1000

1032

**FIG. 11**

**EUROPEAN SEARCH REPORT**

Application Number

EP 25 20 7481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/208932 A1 (PARK DONGKOOK [US] ET AL) 8 July 2021 (2021-07-08) | 1-5, 7-12,14, 15 | INV. G06F11/34 G06F9/50 |
| A | * figures 1, 12, 14 * <br> * claims 7, 9, 10 * <br> * paragraph [0017]-[0019] * <br> * paragraph [0069] * <br> * paragraph [0032] * <br> * paragraph [0051] * <br> * paragraph [0049] * <br> ----- | 6,13 | |
| X | US 2021/117307 A1 (MACNAMARA CHRIS M [IE] ET AL) 22 April 2021 (2021-04-22) | 1-5, 7-12,14, 15 | |
| A | * figure 4 * <br> * abstract * <br> * paragraphs [0102]-[0114] * <br> * claims 1, 12 * <br> ----- | 6,13 | |
| A | US 2021/382744 A1 (TANG WENWEI [CN] ET AL) 9 December 2021 (2021-12-09) <br> * figure 2 * <br> * paragraphs [0043]-[0044] * <br> * claims 1,5 * <br> ----- | 6,13 | TECHNICAL FIELDS SEARCHED (IPC) <br><br> G06F |
| A | CN 118 550 686 A (UNIVERSAL SCIENT IND CO LTD) 27 August 2024 (2024-08-27) <br> * claim 1 * <br> * paragraphs [0006], [0010] * <br> ----- | 4,11 | |

The present search report has been drawn up for all claims

| Place of search | Date of completion of the search | Examiner |
|---|---|---|
| Munich | 17 March 2026 | Leineweber, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7481

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | Publication date | Patent family member(s) | | Publication date |
|---|---|---|---|---|---|
| US 2021208932 A1 | | 08-07-2021 | NONE | | |
| US 2021117307 A1 | | 22-04-2021 | NONE | | |
| US 2021382744 A1 | | 09-12-2021 | CN | 113760515 A | 07-12-2021 |
| | | | US | 2021382744 A1 | 09-12-2021 |
| CN 118550686 A | | 27-08-2024 | CN | 118550686 A | 27-08-2024 |
| | | | TW | 202542728 A | 01-11-2025 |

EPO FORM P0459

For more details about this annex : see Official Journal of the European Patent Office, No. 12/82